# EUROPEAN PATENT APPLICATION

(11) **EP 4 686 711 A1**
(43) Date of publication of application: **04.02.2026**
(21) Application number: 25189329.3
(22) Date of filing: 14.07.2025
(51) Int. Cl.: C04B 28/02, C04B 28/08, C04B 28/18

(54) **CEMENT-FREE ACID-RESISTANT ALKALINE BINDER**

(30) Priority: 31.07.2024 DE 102024121786
(71) Applicant: GP-CEM LTD, Preston PR2 5BQ (GB)
(72) Inventor: Hofele, Jens, 32760 Detmold (DE); Longoria, Joaquin, Houston, TX, 77093 (US)
(74) Representative: Fleuchaus & Gallo Partnerschaft mbB

(57) **Abstract**

The present invention relates to cement replacement material, as well as to its production and its use for reducing the amounts of CO2 which are released when using conventional cements.

## Description

The present invention relates to cement replacement material, as well as to its production and its use for reducing the usually resulting amounts of CO2 which are released when using conventional cements.

According to a publication by the German Federal Environment Agency from 2018, the cement industry was responsible for direct emissions of around 20 million tons of CO2 equivalents. The emissions are mainly generated during the production of cement clinker, with around two thirds resulting from the release of CO2 from the raw materials used and one third from the combustion during the calcination of limestone (according to the reaction CaCO3 → CaO + CO2) at a temperature of at least 850°C.

Due to the diverse use of cement, the construction industry is probably one of the biggest climate drivers, accounting for an estimated 16% of annual global CO2 emissions. In order to successfully decarbonize the cement industry, it is therefore necessary to start at many points in the production processes in the value chain.

CO2 reduction options are therefore being discussed for the area of thermal production processes and the fuels used there, as well as for the area of raw materials, towards a substitution with lower CO2 source materials, and finally also a reduction or substitution of the cement content in concrete.

The publication DE 102008033447, for example, describes silicate building material mixtures and their uses, which add complexing agents such as EDTA to conventional pozzolanic materials in order to bind the calcium ions present in the cement.

Furthermore, the publication EP 3494095 B1 describes a process for a so-called "cold-melt concrete", in which the addition of heat and additives of liquid and/or dry hydroxides as pH value raisers is dispensed with for the production of cement materials. In addition to the conventional ingredients, the cold-melt concrete formulation essentially contains a pollinated fern oil.

In the vast majority of formulations described in the prior art, aqueous additives are added to the formulations to modify the binding properties, e.g. as retarders, accelerators or similar.

The commonly used ingredients or the manufacturing processes of the cementitious formulations are usually produced at high temperatures, which results in intensive CO2 emissions. Furthermore, the setting times in the processes are often not sufficiently efficient or suitable to cause a reduction in CO2 emissions. There is therefore a considerable need to realize a reduction of resources and a saving of CO2 in the production of cement substitutes and to avoid the disadvantages already known in the state of the art.

Even if the previously known and above-mentioned approaches initially appear promising, their large-scale use is often denied, as the material properties of such new or substituted cement replacement materials do not always change favorably. Despite the solution approaches described, the search is therefore still on for inexpensive and resource-saving processes for the production and provision of formulations with which suitable cement improvements can be achieved and produced.

The present invention thus sets itself the task of providing a cement-free binder which, among other things, is free of cement clinker and can serve as a CO2-reduced cement substitute. Said cement-free binder should thereby fulfill and possibly improve the material properties of conventional cement binders.

This task is solved by providing a cement substitute in powder form according to claim 1. Further advantageous details, aspects and embodiments of the present invention are apparent from the dependent claims, the description and the figures.

A composition according to claim 1 containing the following ingredients in the stated proportions has proven to be particularly advantageous:
60 - 94 wt% of pozzolans,
0.1 - 15 wt% of organic biomass and/or bioash,
5 - 20 wt% silicification reaction starter,
0.1 - 1.0 wt% surface-active wetting agent,
0 - 3 wt% MgO and
0.1 - 7.0 wt% retarder ZnSO4 or mixtures with ZnSO4.

Said ingredients are mixed to produce the cement replacement material according to the invention in a dry state and preferably in powdered form, so that the cement replacement material according to the invention is initially in powder form. This form is particularly easy to handle and can be packed in bags or loaded into containers. It is therefore easy to use and check for the quantities added thereof.

To produce concrete, the cement substitute according to the invention is mixed with sand, other known aggregates and water. It is essential that the fly ash reacts with the silicates to a three-dimensional polymeric network. As it is commonly known the particles are preferred in a fine distribution which correlates with a higher surface area resulting in an increased reactivity.

In the context of the present invention, the term "pozzolan" describes water-binding materials that are ground or formed from artificial and/or natural rocks and contain, for example, silicon dioxide, alumina (containing aluminum oxide), burnt alumina (brick dust), limestone or iron oxide or other alkaline substances such as fly ash or lignite ash. Pozzolanic materials are mainly amorphous and only contain a small amount of crystallized silicates and/or aluminates. They are usually produced under the influence of heat. In combination with calcium hydroxide and water, they are capable of chemical reaction at normal temperature with hydraulic hardening and form so-called cement.

The skilled person often understands the definition of the term "pozzolan" to include other pozzolanic agents which are obtained from industrial waste and in particular include bioash or organic biomass. In the context of the invention, such 'organic pozzolans' are independently addressed as "organic biomass and/or bioash", which are also used - as described later - and whereby a sustainable raw material cycle is supported.

The main chemical reaction necessary to produce a reactive binder is the reaction between the water binding materials (pozzolan) and SiO2. Typically, the reaction is started by e.g. metasilicate, which is the more reactive the finer it is grinded.

In the context of the present invention the term "metasilicate" describes amorphous solids or in water viscous solutions. Commonly used are sodium metasilicate and different hydrated forms. The chemical reaction for metasilicates is described by the reaction of disodium carbonate and silicon dioxide forming disodium silicate and carbon dioxide see equation:

2x NaOH + SiO₂ → (Na₂O)ₓ·SiO₂ +*x*H2O

According to the invention, the powdered cement replacement material contains between 60-94wt% of pozzolan. According to further advantageous embodiments, the composition according to the invention contains between 70 - 94wt% of pozzolan, between 80 - 94wt% of pozzolan, or also between 60 - 90wt% of pozzolan, between 70 - 90wt% of pozzolan, between 80 - 90wt% of pozzolan.

According to the invention, the pozzolans are selected from the group of comprising high alkalinity activated fly ash, lignite fly ash, granulated ground blast furnace slag (abbreviated: GGBFS), metacaolin, alumnosilica and mixtures thereof.

In the context of the present invention, the term alumnosilica is further understood as an amorphous three-dimensional microstructure formed by copolymerization of aluminum and silicon species at high pH values in the presence of soluble alkali metal silicates. Aluminum is usually present in the compounds as a threefold positively charged cation in the crystal structure which can be four- or fivefold coordinated.

In the context of the present invention, the term granulated ground blast furnace slag (GGBFS) is to be understood as a cement-like substance with glass contents of 60-100 percent. According to the invention the composition may contain by weight of 1-5wt%, 5-9wt%, 7-12wt%, 10-15wt%, 15 -21wt% of GGBFS as part of the pozzolans.

GGBFS is usually obtained as a by-product of the steel industry. They are sold on to the cement industry as aggregates. GGBFS increase the compressive strength and are preferably used to achieve slower curing times and to avoid the risk of damage due to alkali-silica reactions (ASR) or corrosion damage due to chloride penetration.

Since the majority of the composition of the binder is in fact composed of a pozzolan ash, the development of early strength is at a much slower rate compared to traditional calcium-based cement, which is also the reason for incorporating GGBFS to increase the early strength. However, the max necessary is 21% GGBFS, as exceeding it would compromise the integrity of the binder's acid resistance since GGBFS has a large percentage of calcium ions that will easily dissolve in an acid solution. So, in order to prevent this a limit of 21% GGBFS in the claimed binder needs to be observed.

In the context of the present invention, the term "organic biomass and/or bioash" describes so-called amorphous pozzolans and pozzolan ashes obtained from combustion processes. Bioash and biochar can alternatively also be produced by pyrolysis in incineration plants/biomass cogeneration plants using plant waste and biomass, with and without wood content.

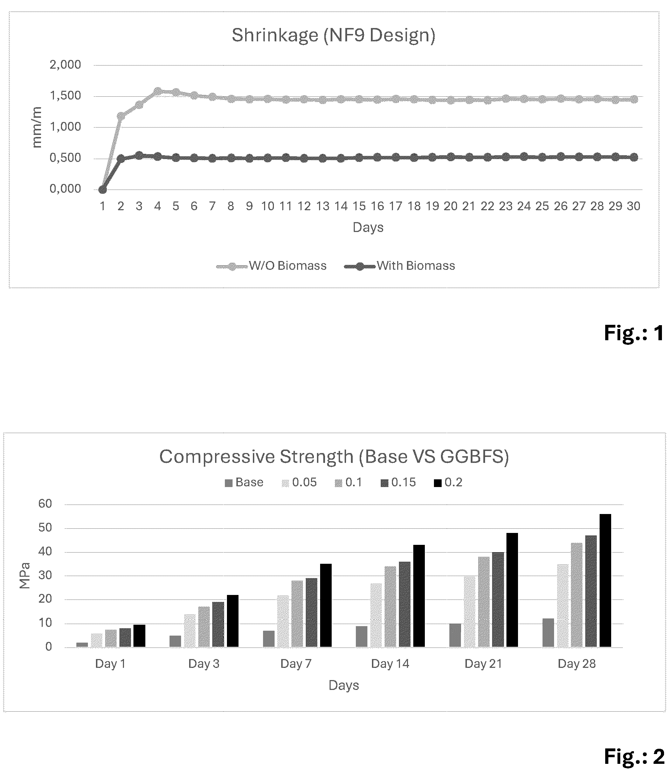

One of the key advantages in incorporating "Organic biomass and/or bioash" along with fly ash is the dramatic reduction of drying shrinkage. Fly ash is known to experience high drying shrinkage due to the large volume of empty pores since majority of the water is not used in the development of the alkaline binder. The shrinkage reduction effect is due to the high calcium (in the form of oxides and hydroxides) content present in the biomass which highly mitigates the shrinkage of the binder by absorbing some of the water content as displayed in Figure 1.

The bioashes can account for up to 15% by weight of the cement substitute and thus also reduce the CO2 emissions in the use and application of concrete by up to this percentage and thus make a significant contribution to "CO2 sequestration" along with reducing the shrinkage prior to introducing biomass into the formulation, the test specimen's shrinkage averaged of 1.4 mm/m. After introducing about 10% of biomass, the shrinkage dropped to about 0.500 mm/m, thus reducing the shrinkage by approximately 35% as displayed in Figure 1.

According to the invention, the powdered cement replacement material contains between 0.1 - 15% by weight of organic biomass and/or bioash. The higher the proportion of organic biomass and/or bioash used in the composition according to the invention, the higher the calculated saving or sequestration of CO2, which is accompanied by an improved CO2 balance.

According to further embodiments, the composition according to the invention may contain 0.3 - 15wt%, 0.5 - 15wt%, 1 - 15wt%, 5 - 15wt%, 10 - 15wt%, 0.3 - 10wt%, 0.5 - 10wt%, 1 - 10wt%, 5 - 10wt%, 6 - 10wt%, 1 - 5wt%, 2 - 7wt%, 4 - 12wt%, 6 - 12wt%, or 8 - 10wt% of organic biomass and/or bioash.

According to the invention, the organic biomass or bioash is selected from the group of burnt or charred organic materials, such as kitchen waste, charred biomass, agricultural waste, wood waste, lignin-containing waste, silages such as corn silage, grass silage, straw, lignocellulose, cellulose, hemicellulose and mixtures thereof.

According to the examples it was shown that prior to incorporating biomass into the formulation, the test specimen's shrinkage averaged 1.4 mm/m.

After introducing about 10% biomass, the shrinkage was reduced to approximately 0.500 mm/m, a reduction of roughly 35.7%, as shown in Figure 1, based on procedures outlined in standard ASTM C157. ASTM C157, "Standard Test Method for Length Change of Hardened Hydraulic-Cement Mortar and Concrete," which involved casting the mortar into specified molds, curing them under controlled conditions, and measuring the change in length over time to assess shrinkage.

In the context of the present invention, the term silicification reaction starter describes so-called substances which are suitable for starting a reaction from the glass portion, the so-called water glass, namely sodium silicates and potassium silicates with a composition M2O*nSiO2 with n = 1, 2, 3 or 4, which usually occur in clear, glassy form and have good water solubility, and silicic acid esters together with pozzolans, natural stones and plaster mortars, the result of which is the formation of a cross-linked silica structure.

Such silicification reaction starters can account for up to 20% by weight of the cement replacement material according to the invention. According to further embodiments, the composition according to the invention may contain 1 - 5wt%, 4 - 9wt%, 5 - 12wt%, 5 - 15wt%, 6 - 10wt%, 7 - 15wt%, 5 - 19wt%, 7 - 18wt%, 10 - 20wt%, 10 - 15wt%, 12 - 20wt%, 14 - 18wt% of the silicification reaction initiator.

With the aid of the silicification reaction starter in the indicated ratio, it was possible to achieve that the compound reaches the necessary crystal structure build-up and, after the setting process and curing, exhibits the desired advantageous material properties such as hydraulic resistance and high load-bearing capacity under compressive and tensile stresses. However, what sets this silicification reaction apart from other alkaline activated binders and geopolymers is the fact that sodium hydroxide is not incorporated nor is high temperature applied. It is a binder that will activate with just water in ambient conditions. This makes it simple and safer for applicators to use since sodium hydroxide is highly caustic to handle.

In the context of the present invention, the term surface-active wetting agent or surface-active agent describes components that can wet the cement-free formulations more actively than conventional proteins are able to do. The commonly used protein casein is used as a comparative value, however, since there are reasons for avoiding protein casein. One reason is the high cost, and a second reason is the solubility of casein being quite low in water. In order to dissolve casein, it would either have to be a high temperature and/or mixed with a high concentration of sodium hydroxide to increase the solubility which can be too caustic for applicators to use. To ensure an activated binder with a low water content, a surface-active wetting agent that reduce the water is incorporated with up to 15% by weight.

According to a preferred embodiment, naphthalene sulfonate, lignin sulfonate, melamine sulfonate, phosphonic acid derivatives such as ethylenediaminetetra(methylenephosphonic acid) EDTMP, polycarboxylate ether, but also casein and mixtures of all of the above are preferably used as surface-active wetting agents according to the composition of the invention.

The surface-active wetting agent are included from 0.1% by weight up to 1.0% by weight into the cement substitute according to the invention. According to further embodiments, the composition according to the invention may comprise 0.15 - 1wt%, 0.2 - 0.9wt%, 0.3 - 0.8wt%, 0.1 - 0.5wt%, 0.4 - 1 wt%, 0.4 - 0.6 wt%, 0.5 - 0.9 wt%, 0.7 - 1wt% of the surface-active wetting agent.

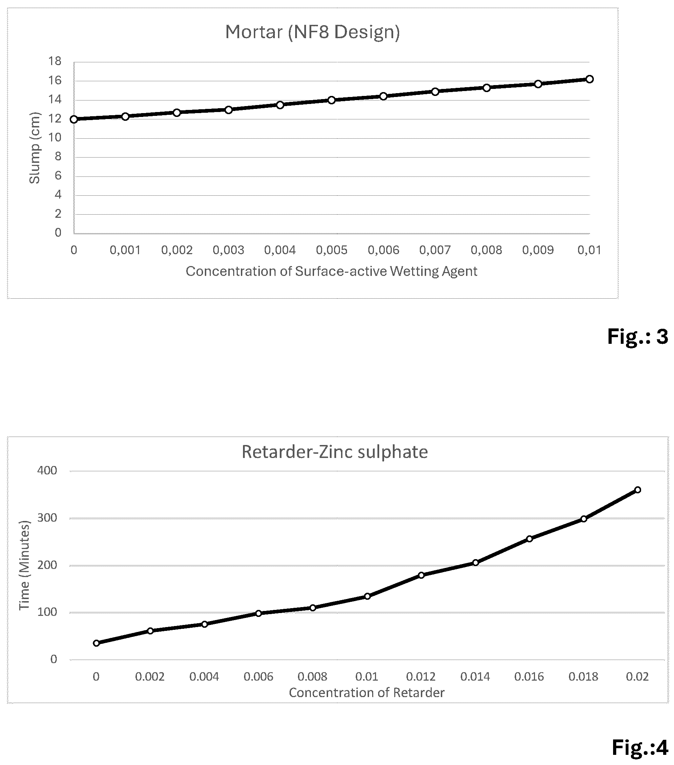

As a technical effect, when using the indicated amounts of the surface-active wetting agent, it can be observed that during the setting process and crystallization, a weak retarding and simultaneously liquefying effect of the formulations is observed, such as an increase of the slump by a maximum of 25% (consistent water ratio) and retardation by 10% was demonstrated using a mortar geopolymer design. As displayed in Figure 3, the initial slump was 12 cm for the mortar, but increased as the concentration of the surface-active wetting agent increased, including the compressive strength. However, exceeding the 1% of the surface-active wetting agent did dramatically reduce the compressive and tensile strength of the test specimen.

The EN 1015-3 procedure was used to determine the consistency of fresh mortar, involving the mixing of mortar with water and a surface-active wetting agent. This mixture was placed into a flow mould, which was then carefully lifted to allow the mortar to spread on a flow table. The table was subjected to 15 controlled knocks, and the diameter of the spread mortar was measured to evaluate its workability and consistency. This measurement was used to compare and contrast the baseline properties of the mortar with and without the additive, assessing the impact of the surface-active wetting agent on the product's performance as demonstrated in Figure 3.

In the context of the present invention, magnesium oxide (MgO) in particular is an essential component. The magnesium oxide may be present up to 3% by weight of the cement replacement material. According to further embodiments, the composition according to the invention may contain 0.1 - 3wt%, 0.2 - 2.5wt%, 0.3 - 2wt%, 0.5 - 1 wt%, 0.5 - 2wt%, 0.5 - 3wt%, 1 - 2wt%, 1 - 3wt%, 0.1 - 1wt%, 0.2 -1.5wt%, 0.2 - 2wt%, 0.7 - 2wt%, 0.8 - 3wt%, 2 - 3wt% of MgO.

The present invention preferably uses purified or chemically pure MgO as an additive. The magnesium oxide serves as a strength enhancer in the formulations and significantly improves the material properties such as the compressive strength by 21% after 24 hours of curing at room temperature. This is due to the calcium carbonate present in the GGBFS and fly ash. Although an XRF analysis did display Calcium oxide, it seems not to be stable and will favorably react with carbon dioxide from the atmosphere to form calcium carbonate. However, when magnesium oxide is added to the composition of the invention, since calcium has a higher reactivity compared to magnesium, it will replace the magnesium and form calcium oxide, which then plays a major role in increasing the early strength as well as decreasing shrinkage.

In the context of the present invention, another essential component is a zinc sulfate-containing retarder. According to the invention, therefore, zinc sulfate or a mixture containing zinc sulfate is added to the cement replacement material in a proportion of 0.1% by weight up to 2.0% by weight as retarder. Said mixture containing zinc sulphate may contain further components selected from the group comprising magnesium sulphate, sodium tetraborate, fruit acids and limestone powder as well as mixtures thereof.

The inventors were able to show that zinc sulfate influences the processing time of the cementitious composition such that sufficient time remains for a desired shaping and processing of the material from the plastic to the rigid state of the material. In the context of the invention, sufficient time is considered to be 0.3 - 6 hours as displayed in Figure 4. The incorporation of zinc sulfate as a retarder in cement products exemplifies its role in extending workability time, crucial for optimizing construction processes. By retarding the setting time, zinc sulfate allows for prolonged manipulation of the cement mix, facilitating better handling and placement on-site. This test was measured according to the EN 196 standard. According to EN 196-3, the effect of zinc sulfate on setting time is meticulously assessed using standardized laboratory procedures. These procedures included the use of a ditigal Vicat apparatus to measure initial and final setting times by monitoring the penetration of a needle into the cement paste every 5 minutes, ensuring accurate determination of setting times. Consistency tests were conducted to ensure the uniformity and workability of the mix.

When selecting retarders, e.g. on construction sites, the geographical latitude of the place of use is of central importance, as some retarders are preferably used in hot climates, as otherwise processing times are too short or none at all.

One such temperature-sensitive compound from the above-mentioned group is, for example, sodium tetraborate, which is preferably added when the inventive composition is provided for tropical climates. In a further preferred embodiment of the invention, the powdered cement replacement material contains monophosphates such as aluminum phosphate and/or polyphosphates, which increase the acid resistance to soluble calcium ions. Since zinc sulphate is an acidic salt, after coming in contact with water, zinc hydroxide is formed which then will readily react with any available calcium ions. Although this key ion enhances the early strength for the alkaline binder, it reduces the workability time as the concentration is increased, especially at high temperatures. However, when zinc hydroxides are made available, the calcium content - in the form of oxides and hydroxides - is consumed prior to being used during the activation of binder. Finally, zinc sulphate is also superior to sodium tetraborate in a hazardous sense due to the fact that borate is banned in the United Kingdom and across the European Union since it is highly toxic to reproduction. Thus, the alkaline binder of the invention offers an advantageous solution and factually can include a retarder, which is sellable across Europe and the UK.

The powdered cement substitute according to the invention is used to produce concrete or mortar together with typical ingredients.

The set material is characterized in particular by the fact that it is acid-resistant and its material properties do not change even in 20% sulphuric acid. The inventors were able to show that a test with sulphuric acid in a pH range of 2 did not lead to any changes in the material.

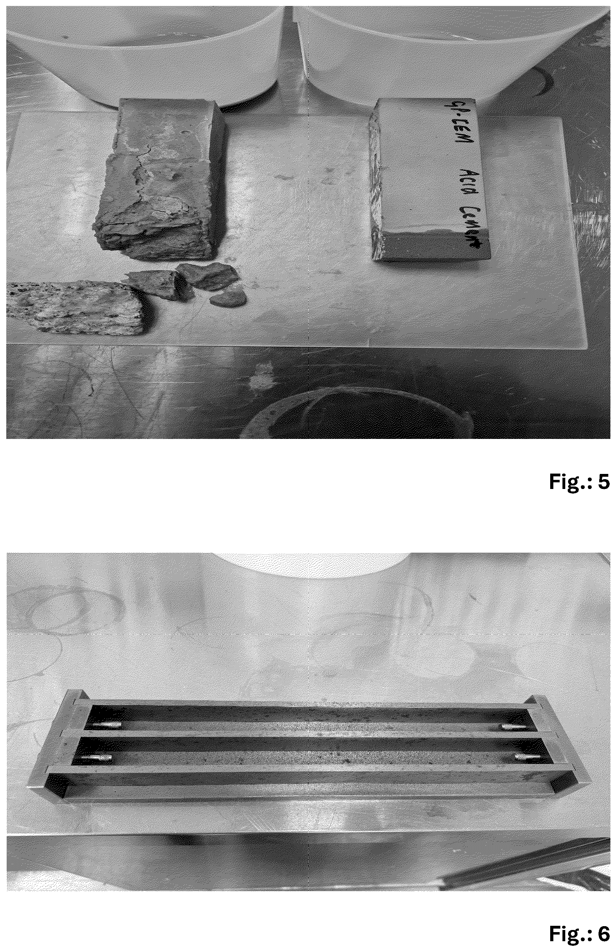

The usual concrete tests carried out on a test specimen and a reference sample for 12 weeks in sulphuric acid at a pH value of 3.5 were used for characterization and displayed no degradation of the test specimen as displayed in Figure 5. From Figure 5 it is also quite clear that the acid dissolved the reference sample but left the test specimen untouched. This is due to the high content of the silica dioxide presence, which is highly resistant against acids, including against extreme temperatures (specifically 800 degrees Celsius). The presence of GGBFS must remain below 21% in concentration in order to ensure the acid resistant is maintained.

The procedure began by mixing a mortar composition consisting of 25% sand, 25% cement, and 50% coarse aggregates. Rectangular prism samples were then produced and cured for 28 days under ambient conditions. The initial mass of each sample was recorded prior to immersion in a 20% sulfuric acid solution. After 12 weeks of exposure to the acid, the samples were removed, and their initial masses were recorded to later determine any changes. This process was designed to evaluate the durability and chemical resistance of the mortar mix. Upon removal from the acid solution, it was observed that the reference sample experienced a 35% reduction in mass as demonstrated in Figure 5, indicative of substantial material degradation. In contrast, the acid-resistant sample showed a 0.005% increase in mass, likely due to the absorption of sulfuric acid into the sample's pore throats.

### Brief description of the drawings

**Figure 1** shows the shrinkage measured in a concrete sample made according to the Examples and in the course of 30 days with and without biomass. As shown in **Figure 1****,** using biomass as a substitute in cement reduces shrinkage of concrete compared to cement without biomass. Average concrete formulations without biomass show a shrinkage behavior of an average shrinkage of 1.4 mm/m over a total period of 30 days. Starting at 0.0 mm/m from day one to day two an increase of the shrinkage up to a value of up to 1.2 mm/m can be observed. Followed by a linear increase up to 1.6 mm/m until day 3,5. After this time the measured values are nearly constant at a stable value of 1.5 mm/m until the end at day 30. For the sample including biomass the shrinkage behavior starts at day one at 0.0 mm/m and increases to a value of 0.5 mm/m till day two and raises slightly until a value of 0.6 mm/m at day three and remains in the range of 0.45 up to 0.5 mm/m until the end of the 30 days. By using up to 10% biomass as a substitute in the cement a reduced shrinkage of about 35.7% is obtained.
**Figure 2** shows the measurements of the compressive strength over a time of 28 days when using a base composition (BASE) and comparative compositions with increasing concentrations from 0%, 5%, 10%, 15% and 20% of GGBFS. Figure 2 shows there is always the highest value received over time when using a binder with up to 20% GGBFS. This effect is observed during the whole time. Additionally, for every step an increase can be observed when the concentration is increased for 5%. Regarding the BASE without GGBFS the measured compressive strength starts at about 2.5 MPa at day 1 and ends at about 10 MPa at day 28. Using a comparative composition with GGBFS of 5% the compressive strength starts at about 5 MPa at day 1 and ends at a value of 35 MPa at day 28. Using a comparative composition with GGBFS of 10% the compressive strength starts at about 7.5 MPa at day 1 and ends at a value of 45 MPa at day 28. Using a comparative composition with GGBFS of 15% the compressive strength starts at 8 MPa at day 1 and ends at a value of 47.5 MPa at day 28. Using a comparative composition with GGBFS of 20% the compressive strength starts at 9 MPa at day 1 and ends at a value of 58 MPa at day 28.
In **Figure 3** the slump increase for Mortar NF8 Design is shown for different concentrations of a surface-active wetting agent. At a concentration of 0.0 of the surface-active wetting agent the value of the slump starts at 12 cm and linearly increases up to the final concentration of about 0.01 to a slump value of about 16.5 cm.
**Figure 4** shows for the retarder zinc sulphate the increase over the concentration of the retarder and the time. The concentration is shown on the x-axis in a range from the absolute amount added being 0 g (corresponding to 0%) up to 0.02g in the example (corresponding to 2%). On the y-axis the range of the time starts at 0 Minutes and ends at 360 Minutes. The curve starts at a concentration of 0.0 at a retarded time of 30 Minutes and increases during increasing the concentration of the retarder to the final concentration of 2% of zinc sulfate to a retardation time of 360 Minutes. While the curve increases to a concentration of 1% at the beginning linearly to a time of about 130 minutes rises the curve more steep to longer retardation while the concentration is increased.
**Figure 5** shows two real samples in the acid resistance test. A conventional concrete sample on the left side of the picture shows no acid resistance against a 20% sulphuric acid while a sample according to the invention shows on the right side of the picture a stable acid resistance against 20% sulphuric acid.
**Figure 6****:** Mould prism for shrinkage measurement, using ASTM C157. Cement was poured into the shrinkage mould and the shrinkage mold was then stored in ambient conditions and demolded after 24 hours. Shrinkage samples were then measured using a digital length comparator for a total of 28 hours with a 24 hour interval.

### Examples

### 1. Exemplary composition NF1 - Base mix without GGBFS

The powdered cement substitute was mixed according to the following percentage list and the material properties were tested after setting. In this base mix fly ash was gradually replaced with GGBFS to show the strength improvement and find the max. concentration of GGBFS for a resistance against 20% sulphuric acid.

| ***Formulation NF1 - Base mix (BASE)*** | | | | |
|---|---|---|---|---|
| ***Ingredients*** | **%** | ***Compressive strength*** | ***Flexural strength*** | ***Set Time*** |
| *Fly Ash (pozzolans)* | *87,72%* | *50 MPa* | *6 MPa* | *1 h and 10 minutes at 40 °C* |
| *GGBFS (pozzolans)* | *0,00%* | | | |
| *Microsilica* | *0,64%* | ***Water added for test*** | ***Comments*** | |
| *Sodium Metasilicate -Powder* | *11,31%* | *31,62%* | ***Results are based on a 25% cement ratio*** | |
| *Sodium Caseinate (surface-active agent)* | *0,33%* | | *Cement* | *25%* |
| *Zinc Sulfate* | *0,00%* | | *Fine sand* | *25%* |
| ***Total %*** | ***100,00%*** | | *Coarse Sand* | *50%* |

### 2. Exemplary composition NF8

The powdered cement substitute was mixed according to the following percentage list and the material properties were tested after setting.

| ***Formulation NF8 - Acid resistant with improved strength development*** | | | | |
|---|---|---|---|---|
| ***Ingredients*** | **%** | ***Compressive strength*** | ***Flexural strength*** | ***Set Time*** |
| *Fly Ash (pozzolans)* | *65,63%* | *50 MPa* | *6 MPa* | *1 hr and 10 minutes at 40 °C* |
| *GGBFS (pozzolans)* | *20,27%* | | | |
| *Microsilica* | *0,64%* | ***Water added for test*** | ***Comments*** | |
| *Sodium Metasilicate -Powder* | *11,31%* | *31,62%* | ***Results are based on a 25% cement ratio*** | |
| *Sodium Caseinate (surface-active agent)* | *0,33%* | | *Cement* | *25%* |
| *Zinc Sulfate* | *1,82%* | | *Fine sand* | *25%* |
| ***Total %*** | ***100,00%*** | | *Coarse Sand* | *50%* |

The product made with this alkaline binder is then tested for compressive and flexural strength according to standard methods. The results are presented in the figures in comparison to conventional materials such as the base mixture of Example 1.

### 3. Exemplary composition (NF9) with Biomass

In one embodiment, the cement substitute was mixed according to the following percentage list and the material properties were tested after setting.

| ***Formulation NF9 - Shrinkage optimized*** | | | | |
|---|---|---|---|---|
| ***Ingredients*** | **%** | ***Compressive strength*** | ***Flexural strength*** | ***Set Time*** |
| *Fly Ash* | *69,93%* | *27 MPa* | *4,6 MPa* | *30 to 45 minutes at Room temperature (21°C)* |
| *Biomass* | *10,19%* | | | |
| *Microsilica* | *3,06%* | ***Water added for test*** | ***Comments*** | |
| *Sodium Metasilicate -Powder* | *15,46%* | *30,91%* | ***Results are based on a 25% cement ratio*** | |
| *Sodium Caseinate* | *0,36%* | | *Cement* | *25%* |
| *Zinc Sulfate* | *1,00%* | | *Fine sand* | *25%* |
| ***Total %*** | *100,00%* | | *Coarse Sand* | *50%* |

The mixing process followed ASTM C305, "Standard Practice for Mechanical Mixing of Hydraulic Cement Pastes and Mortars of Plastic Consistency," ensured consistent and thorough mixing of materials. In this case, the mixture comprised 25% cement, 25% fine sand, and 50% coarse aggregates.

Following ASTM C305 ensured the mortar achieved a uniform consistency and homogeneity, crucial for reliable shrinkage measurements.

The prepared mortar was then poured into a shrinkage mold, displayed in Figure 6, with dimensions of 28.5 cm in length and 2.5 cm in width. This mould was used for measuring shrinkage according to ASTM C157, which allowed for accurate assessment of how the addition of bioashes affected the material's dimensional stability.

The comparison of a standard cement and the cement of the present invention comprising about 10% biomass regarding the shrinkage is demonstrated in Figure 1.

### 4. Exemplary composition (NF10) acid resistance

In one embodiment, the cement substitute was mixed according to the following percentage list and the material properties were tested after setting.

| ***Formulation NF10 optimized acid resistance*** | | | | |
|---|---|---|---|---|
| ***Ingredients*** | **%** | ***Compressive strength*** | ***Flexural strength*** | ***Set Time*** |
| *Fly Ash* | *77,48%* | *30 MPa* | *6,2 MPa* | *30 to 45 minutes at Room Temperature (21°C)* |
| *Biomass* | *3,31%* | | | |
| *Microsilica* | *2,98%* | ***Water added for test*** | ***Comments*** | |
| *Sodium Metasilicate-Powder* | *15,08%* | *31,52%* | ***Results are based on a 25% cement ratio*** | |
| *Sodium Caseinate* | *0,35%* | | *Cement* | *25%* |
| *Zinc Sulfate* | *0,80%* | | *Fine sand* | *25%* |
| ***Total %*** | *100,00%* | | *Coarse Sand* | *50%* |

## Claims

1. Powdered cement substitute containing:
60 - 94wt% pozzolans,
0.1 - 15wt% organic biomass and/or bioash,
5 - 20wt% silicification reaction starter,
0.1 - 1.0wt% surface-active wetting agent,
0 - 3wt% MgO and
0.1 - 2.0wt% retarder,
**characterized in that**
the retarder is ZnSO₄ or consists of a mixture containing zinc sulphate.

2. Powdered cement replacement material according to claim 1 wherein the pozzolans are selected from the group comprising fly ash activated with high alkalinity, lignite fly ash, GGBFS (Granulated Ground Blast Furnace Slag), metacaolin, alumnosilica and mixtures thereof.

3. Powdered cement replacement material according to claim 1 or 2 wherein the organic bioash and/or biomass is selected from incinerated or charred organic materials, kitchen waste, agricultural waste, wood waste, lignin-containing waste and mixtures thereof.

4. Powdered cement replacement material according to claim 1 to 3 wherein the silicification reaction starters are selected from the group consisting of metasilicate, sodium metasilicate, sodium monosilicate, sodium disilicate and mixtures thereof.

5. Powdered cement replacement material according to claim 1 to 4 wherein the surface-active wetting agent is selected from the group consisting of naphthalene sulfonate, lignin sulfonate, melanin sulfonate, polycarboxylate ether, casein and mixtures thereof.

6. Powdered cement replacement material according to claim 1 to 5 wherein the retarders are selected from the group consisting of ZnSO₄, MgSO₄, sodium tetraborate, fruit acids and mixtures thereof.

7. Powdered cement replacement material according to claims 1 to 6,
**characterized in that**
the cement replacement material is used together with water, sand and concrete aggregates for the production of concrete and the setting product, which are acid-resistant and have material properties that do not change in 20% H₂SO₄.
